# EUROPEAN PATENT APPLICATION

(11) **EP 0 594 159 A1**
(43) Date of publication of application: **27.04.1994**
(21) Application number: 93117001.3
(22) Date of filing: 20.10.1993
(51) Int. Cl.: A01G 31/02, A01K 63/00

(54) **Natural ecosystem reproducing method**

(30) Priority: 22.10.1992 JP 309235/92; 16.03.1993 JP 82633/93
(71) Applicant: Yanohara, Yoshitami, Osaka-shi, Osaka-fu (JP)
(72) Inventor: Yanohara, Yoshitami, Osaka-shi, Osaka-fu (JP)
(74) Representative: Schoppe, Fritz, Dipl.-Ing.

(57) **Abstract**

A natural ecosystem reproducing method comprising a step of preparing as a container, for example, a box-like bed (12) with its top open for receiving living things such as plants, for example, green vegetables, rootcrops and fruit vegetables and aquatics like fishes, shells and crustaceans and growing such plants and aquatics, a step of storing in the bed a culture solution containing nutrients for growth of such plants and aquatics, a step of waving the culture solution by means of a wave maker (44,46) which moves vertically a rectangular parallelepiped wave-making element (52,58) disposed above the bed and made of, for example, a synthetic resin and a step of periodically and vertically changing the level of the culture solution stored in the bed to thereby cause a ebb and flow phenomenon in the bed.

## Description

### BACKGROUND OF THE INVENTION

### Field of the Invention:

The present invention relates to a natural ecosystem reproducing method, particularly relating to that of reproducing natural ecosystem applied to culture of plants such as green vegetables, rootcrops and fruit vegetables and rearing of aquatic animals such as fishes, shells and crustacean, Annelida (Oligochaeta, Polychaeta etc.) and sea weeds.

### Description of the Prior Art:

As the plant culture method by the use of conventional hydroponic apparatus known as the background of the present invention there is, for example, what is called circulative hydroponic method. In this plant culture method water for irrigation from a water source is stored in a tank and a culture solution is prepared by dissolving fertilizer salts therein. This culture solution is pumped up as necessary and is fed through a pipe into the bed. A given amount of culture solution is then stored in the bed and the culture solution is allowed to overflow through a drain hole into the tank when the given water level is exceeded. The circulation route for the culture solution is equipped with various aerating apparatus such as sprayers, aerator and of natural solution falling system.

Such conventional plant culture method is generally expensive due to high initial cost for it requires a large tank for storage of the culture solution, a large and high-power pump for circulation of the culture solution and complicated apparatuses for supplying oxygen into the culture solution.

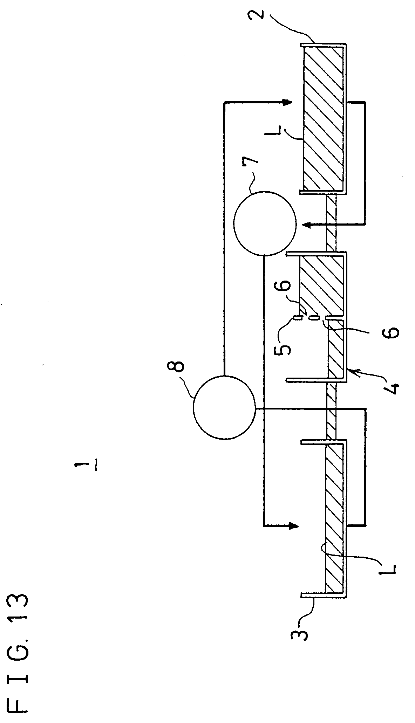

Meanwhile, another plant culture method, which allows circulation of the culture solution without any tank is proposed. Fig. 13 is an illustrative view showing an example of hydroponic culture apparatus used for this culture method. This hydroponic culture apparatus 1 includes beds 2 and 3 disposed symmetrically, and an exchange tank 4 is disposed between the beds 2 and 3. This exchange tank 4 has fitted therein a partitioning plate 5. The partitioning plate 5 has formed therein a plurality of connecting holes 6. To the beds 2 and 3 the culture solution L is supplied by the pumps 7 and 8. Since the pumps 7 and 8 are operated alternately for the same length of time, the culture solution L in the beds 2 and 3 are exchanged at the equal interval, the quantity exchanged in cycles being the same.

That is, when the pump 8 has been operated for a given length of time, the culture solution L in the bed 3 is supplied to the bed 3 and the bed 2 is filled with the culture solution L. The bed 2 is then nearly emptied. In this hydroponic apparatus 1, if the pumps 7 and 8 have been stopped, the culture solution L is naturally supplied from the bed 2 to the other bed 3 through the connecting holes 6 in the partitioning plate 5 of the exchange tank 4. Then, the pump 7 is started to supply the culture solution L from the bed 2 to the bed 3. With this hydroponic apparatus 1 the culture solution L is never still stood unless the portions of the bed 2 and 3 are balanced.

Hence, in a plant culture method using this conventional hydroponic apparatus 1 the initial cost can be saved substantially for the movement of the culture solution can be made without using tanks which have been essential.

Meanwhile, as a fish rearing method using a conventional breeding equipment referred to as the background of the present invention there has been one circulating water through feeding thereof by means of, for instance, a pump. In this conventional breeding equipment a filters such as a strainer is provided in the water circulation route and further, in the water tank there is provided a bubbling apparatus for supplying oxygen.

In this plant culture method using the conventional hydroponic apparatus 1 as shown in Fig. 13 the pump and the exchange tank are required and the initial cost is bound to be high. Moreover, since the operation of the pump, size, shape, number et cetera of the connecting holes in the partitioning plate 5 set in the exchange tank 4 have to be adjusted for proper control of level of the culture solution L, this being highly troublesome. Since the movement of the culture solution L between the beds is quite slow, the amount of oxygen supplied to the culture liquid L was limited.

Further, with the hydroponic apparatus 1 shown in Fig. 13 and further conventional hydroponic apparatus the plant's roots soaked in the culture solution L were nearly still-stood or swaying, if any, was very limited and dissolving of oxygen into the culture solution was highly insufficient and reproduction of the environmental conditions, in other words, the natural ecosystem suited for growth of plant in the bed was difficult.

Meanwhile, in the fish rearing method used for the conventional breeding equipments the initial cost of apparatuses such as pumps, filters and bubbling apparatuses is quite high. Moreover, since with the conventional breeding equipment supply of oxygen into the water tank is insufficient and dissolving of oxygen into the rearing solution was limited. Hence with the fish rearing method using any conventional equipment environmental conditions suited for rearing of aquatics such as fish, in other words, natural ecosystem suited for rearing of aquatics was difficult to reproduce in a water tank.

### SUMMARY OF THE INVENTION

The main object of the present invention is to provide a simple and low-cost method for reproduction of natural ecosystem, in which environmental conditions suited for the growth of living things such as plants and aquatics.

The present invention, therefore, relates to a natural ecosystem reproducing method comprising a step of preparing a container for growth of living things therein, a step of storing in the container a culture solution for growth of living things, a step for causing the culture stored in the container to wave and a step of vertically displacing the level of culture solution periodically.

In the step of storing the culture solution, the culture solution is fed into the container. In the step of waving the culture solution, the culture solution in the container is caused to wave. As the culture solution waves, air is continuously dissolved into the interface layer of the culture solution in the container which is agitated by waving. Also, the step of displacing the level of the culture solution periodically and vertically, the level causes a periodical phenomenon "ebb and flow" in the container.

According to the present invention, a method of naturally reproducing the ecosystem by which environmental conditions suited for growth of living things such as plants and aquatics simply at a low cost can be worked out. That is, by the natural ecosystem reproducing method of the invention is displaced intermittently the level of the culture solution, hence the culture solution in the container is subject to a phenomenon of ebb and flow intermittently, this enhancing dissolving of oxygen in the culture solution.

Further, by making waves intermittently the boundary layer of the culture solution in the container can be made thinner, this enhancing efficient and natural dissolving of oxygen in the air. In this case, since air is brought into the interface layer of the culture solution as it waves, oxygen in the air is continuously dissolved under the interface layer of the culture solution, this causing increase of the oxygen content of the culture solution. Moreover, waving enhances flowing of the culture solution, this resulting in uniformizing of nutrients in the culture solution.

Hence, according to the natural ecosystem reproducing method of the present invention, ample oxygen and nutrients are supplied to the living things grown in some container such as plants and aquatics for enhancing growth thereof.

The aforementioned objects, other objects, features, phases and merits of the present invention will become further apparent through detailed description of the following embodiments made with reference to the drawings.

### BRIEF DESCRIPTION OF THE DRAWINGS

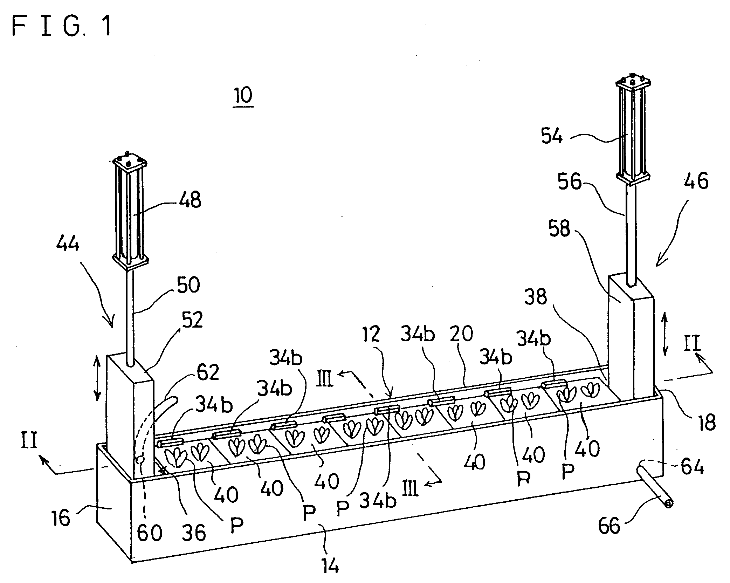

Fig. 1 is a perspective view showing an embodiment of the present invention.

Fig, 2 is a sectional view taken along the line II-II in Fig. 1.

Fig. 3 is an sectional end view taken along the line III-III in Fig. 1.

Fig, 4 is an illustrative view showing the essential parts of the wave-making mechanism comprising a wave maker.

Fig. 5 is an illustrative view showing another example of living things growing equipment shown in Figs. 1-4.

Fig. 6 is an illustrative view showing still another example of the living things growing equipment shown in Figs. 1-4.

Fig. 7 is essential view showing the essential parts of still a further example of the living thing growing equipment shown in Figs. 1-4.

Fig. 8 is an illustrative view of the essential parts of the wave-making element shown in Fig. 7.

Fig. 9 is an illustrative view of the essential parts of another example of the living thing growing equipment shown in Fig. 6.

Fig. 10 is an illustrative view of still another example of the living things growing equipment shown in Figs. 1-4.

Fig. 11 is an illustrative view showing another embodiment of the present invention.

Fig. 12 is an illustrative view showing still another embodiment of the present invention.

Fig. 13 is an illustrative view showing an example of a plant culture method using a conventional hydroponic apparatus referred to as the background of the present invention.

### DESCRIPTION OF THE PREFERRED EMBODIMENTS

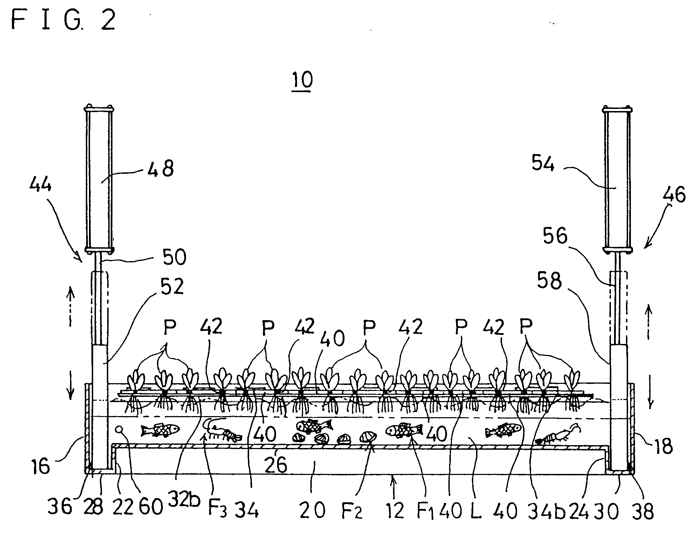

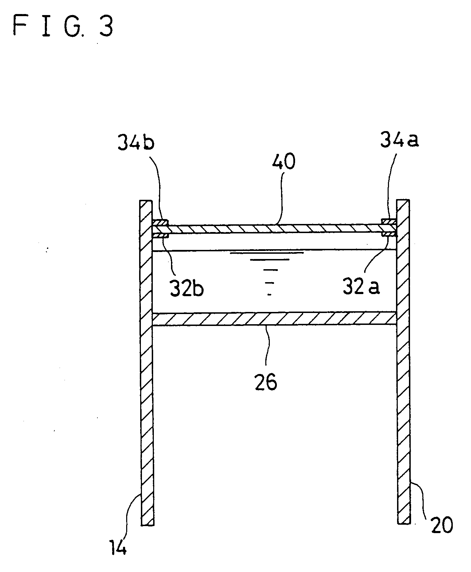

Fig. 1 is a perspective view showing an embodiment of the present invention, Fig. 2 is a sectional view taken along the line II-II in Fig. 1 and Fig. 3 is a sectional end view taken along the line III-III in Fig. 1. In this embodiment first described is a living things growing equipment used in a method of reproducing natural ecosystem for culture of plants such as green vegetables, rootcrops and fruit vegetables and rearing of aquatics such as fishes, shells and crustaceans.

A living things growing equipment 10 includes a bed 12 as container. The bed 12 comprises, for example, a rectangular plate-shaped front member 14 of, for example, a synthetic resin and at one and the other longitudinal ends of the front member 14 are formed, for example, rectangular plate-shaped first side member 16 and second side member 18.

The first side member 16 and the second side member 18 are formed extending perpendicularly from one and the other longitudinal ends of the front member 14, while the first side member 16 and the second side member 18 are formed extending in the same direction opposite each other. The first member 16 and the second member 18 are both made of the same synthetic resin with their longitudinal lengths being substantially the same as the lateral length of the front member 14, and its lateral length is approximately two thirds of the lateral length of the front member 14. In this case, one lateral end of the first side member 16 is bonded to one longitudinal end face of the front member 14 using, for example, an adhesive and one lateral end of the second side member 18 is likely adhesive-bonded to the other longitudinal end face of the front member 14.

Between the first side member 16 and the second side member 18 there is formed a back member 20 of, for example, a synthetic resin. This back member 20 is formed in the same size and shape as the front member 14 and is disposed between the other lateral end of the first side member 16 and the other lateral end of the second side member 18. In this case, one longitudinal end face of the back member 20 is, for example, adhesive-bonded to the other lateral end of the first side member 18 and the other longitudinal end face of the back member 20 is also, for example, adhesive-bonded to the other lateral end of the second side member 18.

Further, between the first side member 16 and the second side member 18 there are formed, for example, rectangular plate-shaped first partitioning member 22 and the second partitioning member 24 at a given distance. The first partitioning member 22 is formed parallel with the first side member 16 also at a given distance, while the second partitioning member 24 is formed parallel with second side member 18 also at a given distance. The first partitioning member 22 and the second partitioning member 24 are made of, for example, a synthetic resin, its lateral length is approximately same as the distance between the first side member 16 and the second side member 18, and its longitudinal length is approximately two thirds of the lateral length of the second side member 18. In this case, one lateral end face and the other end face of the first partitioning member 22 and the second partitioning member 24 are, for example, adhesive-bonded to the inside of the first side member 16 and the second end member 18 respectively.

Also, between the front member 14 and the back member 20, there is formed a rectangular plate-shaped third partitioning member 26 is formed. The third partitioning member 26 is formed between the upper end of the first partitioning member 22 and the upper end of the second partitioning member 24. This third partitioning member 26 has formed its longitudinal length approximately equal to the distance between the first partitioning member 22 and the second partitioning member 24 and with its lateral length is approximately the same as the distance between the front member 14 and the back member 20. In this case, the third partitioning member 26 has its one longitudinal end, for example, adhesive bonded to the upper end face of the first partitioning member 22 and the other longitudinal end portion of the third partitioning member 26 is bonded to the upper end face of the second partitioning member 24 using, for example, an adhesive. At the same time, the third partitioning member 26 has one of its lateral and the other lateral end faces bonded to the inside of the front member 14 and the other lateral and end faces bonded to the inside of the back member 20 using, for example, an adhesive.

Between the lower end of the first side member 16 and the lower end of the first partition member 22 there is formed a rectangular plate-shaped first bottom member 28 made of, for example, a synthetic resin. The first member 28 has its longitudinal length equal to the lateral length of the side member 16 and its lateral length roughly equal to the distance between the first side member 16 and the first partitioning member 22. In this case, the first bottom member 28 has one longitudinal end, for example, adhesive-bonded to the lower end of the first member 14, while the other longitudinal end is, for example, adhesive-bonded to the lower end of the back member 20. At the same time, one lateral end of the first bottom member 28 is, for example, adhesive-bonded to the lower end of the first side member 16, while the other lateral end is, for example, adhesive-bonded to the lower end of the first partitioning member 22.

Similarly, the second bottom member 30, for example, has its one longitudinal end, for example, adhesive-bonded to the lower end of the front member 14, while the other longitudinal end is, for example, adhesive-bonded to the lower end of the back member 20. At the same time, one lateral end of the second bottom member 30 is, for example, adhesive-bonded to the lower end of the second side member 18, while the other lateral end thereof is, for example, adhesive-bonded to the lower end of the second partitioning member 24.

Meanwhile, inside of the front member 14 and the back member 20, supporting members 32a and 32b extending longitudinally are formed respectively. The supporting members 32a and 32b are both bar-like rectangle-sectioned and made of, for example, a synthetic resin, its length being roughly equal to the longitudinal length of the third partitioning member 26. These supporting members 32a and 32b are formed at the given and same distances from the upper ends of the front member 14 and the back member 20.

Further, a plurality of projecting member 34a and 34b are formed on the upper inside part of the front member 14 and the back member 34b at given lateral spaces between the supporting members 32a and 32b, while projections 34a and 34b are formed on the front member 14 and the back member 20 at longitudinal distances. These projection members 34a and 34b are formed opposite each other respectively. Made of, for example, a synthetic resin, these are bar-like and rectangle-sectioned, their lengths being approximately 1/20 of the supporting members 32a and 32b.

The two supporting members 32a and 32b and a plurality of supporting members 34a and 34b are, for example, adhesive-bonded to the upper part of the inside of the front member 14 and the back member 20.

A box-like tow-layer structure bed 12 rectangle in plan view and with its top open is formed as a container by thus connecting the front member 14, first side member 16, second side member 18, back member 20, first partitioning member 22, second partitioning member 24, third partitioning member 26, first bottom member 28, second bottom member 30, supporting members 32a, 32b and projecting members 34a and 34b. In this case, the bed 12 has a first solution tank-portion 36 and a second solution tank-portion 38 roughly U-sectioned at one longitudinal end and the other longitudinal end thereof.

The bed 12 may as well be made in one united body by, for example, injection molding of the aforementioned individual members. Although in this embodiment the aforementioned members are made of a synthetic resin but they may as well be made by form molding, and their materials are not limited to synthetic resins and may as well be made by foam molding, may be made of wood finished by water-proofing and may also be made of other materials such as aluminum alloys and stainless steel.

Over the bed 12 there are formed a plurality of planting panels 40 held on the supporting members 32a and 32b. In other words, each planting panel 40 is inserted between the topside of the supporting members 32a and 32b and the underside of the projecting members 34a and 34b. In this embodiment the planting panel 40 is supported by the supporting member 32a and 32b, it may as well be supported by the supporting member 32a only. The planting panel 40 may be made of polystyrene foam and is rectangle-shaped. In this planting panel 40 there are made two holes (not shown) and in these holes cubic urethane blocks 42 for planting are set. In this embodiment these urethane blocks 42 are planted, for example, seedlings of plants P such as lettuce, spinach, honeywort and "kaiware"(white radish sprouts).

In this embodiment planting panel 40 with seedlings planted therein is inserted up in the bed 12 but instead the plant's seeds may possibly be sown directly thereon and as culture medium, instead of urethane block, something like lock wool may as well be used.

This living things growing equipment 10 has wave makers 44 and 46 at one longitudinal end and the other longitudinal end of the bed 12 respectively. And these wave makers 44 and 46 comprise piston cylinders 48 and 54 as a displacing means and wave-making elements 52 and 58 intermittently moving vertically at a given cycle.

In this case, one of the piston cylinders 48 is disposed above one longitudinal end of the bed 12 and the other piston cylinder 54 is disposed above the other longitudinal end of the bed 12. The piston cylinders 48 and 54 are secured to, for example, a frame (not shown) above the bed 12 using fittings (not shown). The forward end of the piston cylinder 48 and the forward end of the piston cylinder 54 have connected thereto rectangle parallelepiped wave-making elements 52 and 58 respectively, which are made of some synthetic resin and some corrosive metal such as stainless steel.

These wave makers 44 and 46 cause the wave-making elements 52 and 58 can get in and out of the first solution tank-portion 36 and the second solution tank-portion 38 through vertical reciprocating motion of the piston cylinders 48 and 54 repeatedly.

With this living things growing equipment 10 the culture solution L comprising a nutrient solution as a mixture of a nutrient solution made by dissolving nutrients for plants in water, rhizosphere microbes effective for plant's roots and a nutrient solution having mixed therein feeds for aquatics is fed and stored. In this case, the bed 12 is provided with a feed hole 60 for feeding the culture solution L at one longitudinal end of the back member 20 and this feeding hole 60 has connected thereto a feeding pipe 62. To this feeding pipe 62 is fed the culture solution L, as necessary, by means of a small pump (not shown). Further, the bed 12 is provided a drain hole 64 for draining the culture solution L at the other longitudinal direction of the front member 14. This drain hole 64 has connected thereto a drain pipe 66 for draining the solution solution L out of the bed 12 as necessary.

In this living things growing equipment 10, when the wave-making elements 52 and 58 are not inserted into the first solution tank-portion 36 and the second solution tank-portion 38, the culture solution L's amount in the bed 12 is kept lest the roots Q of plant P should be soaked in the culture solution L stored in the bed 12. In this case, when the wave-making elements 52 and 58 are inserted into the first solution tank-portion 36 and the second solution tank-portion 38, the level of the culture solution L in the bed 12 is set so that the roots Q of plant P are soaked in the culture solution L. This initially set level of the culture solution L in the bed 12 is changeable as necessary through adjustment of the volumes of the wave-making elements 52 and 58.

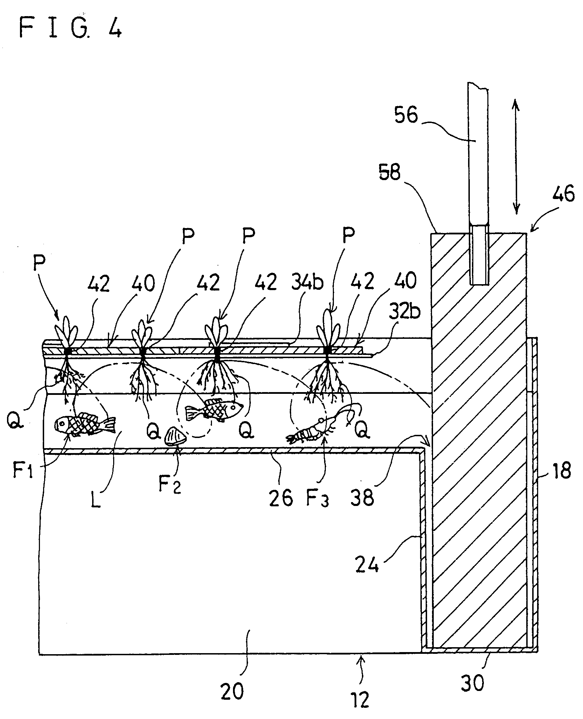

In this living things growing element 10, as shown, for example, in Fig. 2 and Fig. 4, the wave-makers 44 and 46 are driven intermittently and alternately. When the wave-making elements 52 and 58 are inserted into the first solution tank-portion 36 and the second solution tank-portion 38 respectively, the roots Q of plant P are soaked in the culture solution L for the solution L stored in the bed 12 is caused to wave. That is, when the piston cylinders 48 and 54 are driven, the rods 50 and 56 come down and the wave-making elements 52 and 58 are inserted into the first solution tank-portion 36 and the second solution tank-portion 38 respectively. And then the solution L flows in the bed 12 waving and soaks the roots Q of plant P. Further, in this living things growing equipment 10, wave makers 44 and 46 are operated alternately, this further intensifying waving in the bed 12.

Also, in this living things growing equipment 10, the ebb-and-flow phenomenon of the culture solution L can be caused in the bed 12 since, when the wave makers 44 and 46 are driven, the the vertical stroke of the wave-making elements 52 and 58 in the bed 12 against the initial culture solution level is adjustable as well as the insertion time of the wave-making elements 52 and 58 into the bed 12. When the vertical stroke of the wave-making elements 52 and 58, which means the depth of insertion thereof, is made large and also when the wave-making elements 52 and 58 are allowed to stand still in the bed 12 for a given length of time, the level of the culture solution L rises, to cause the so-called flow condition. Meanwhile, when the wave-making elements are pulled out of the culture solution L after lapse of a given length of time thereafter, the level of the culture solution in the bed 12 falls, to cause the so-called ebb condition.

That is, with this living things growing equipment 10 small waves can be made as the vertical stroke of the wave making elements 52 and 58 are made smaller and the cycle thereof is made shorter. Meanwhile, the vertical stroke of the wave-making elements 52 and 58 is made larger and the cycle of rise and fall of the wave-making elements 52 and 58 is made longer, more marked phenomenon of ebb and flow of the culture solution L in the bed 12 results.

Now, description is made of an example of growing method for plants and aquatics by the use of this living things growing equipment 10.

First, the culture solution L nutrient for the growth of plants and aquatic animal is fed into the bed 12 of the living things growing equipment 10 to a given level and stored therein. Then, in the culture solution L in the bed 12 are released aquatics including fishes F₁ such as sweet fish ("ayu" in Japanese) and trout, shells F₂ such as corbicula , corbiculae and other shells for growth in fresh water, shrimps also for growth in fresh water and crustacean F₃. Above the bed 12 are arranged planting panels 40 planted with seedlings of a plant P such as lettuce, spinach, honeywort and "kaiware"(white radish sprouts) In this living things growing equipment 10 plants P can be cultured in the upper part of the bed 12, while in the culture liquid thereunder aquatics are reared in the culture solution L.

In the growing method using living things growing equipment 10, the air is brought into the interface layer of the culture solution L by intermittently waving the upper layer of the culture solution in the bed 12 by means of the wave maker 44 and 46. Then the oxygen in the air dissolves in the solution L and the dissolved oxygen of the interface layer is increased. The roots Q of plant P absorbing oxygen from the air can also absorb dissolved oxygen in the culture solution L from the interface layer thereof. If the amount of the culture solution L stored in the bed 12 is increased, the solution flow in the bed 12 is enhanced by the wave makers 44 and 46, this resulting in an improved effect of oxygen supply to the root. Further, ample supply of oxygen to rhizosphere microbes effective and symbiotic for the roots Q of plants P will results.

Since, during waving, the roots Q of plant P are continually swayed by the culture solution L, gas exchange between carbon dioxide and oxygen in the roots Q of plant P is improved. In this case, simultaneously with swaying of the roots Q by waving the plant P as a whole is swayed, hence gas exchange between carbon dioxide and oxygen is activated. Further, besides plant P as a whole, leaves, too, are swayed, hence natural breeze is caused in the bed 12.

For aquatics such as fishes F₁, shells F₂ and crustacean F₃ growing in the bed 12, too, natural ample dissolving of oxygen in the air markedly enhance rearing thereof.

Further, waving causes stirring of the culture solution L, hence nutrients required for water in the culture solution L, plant P and aquatic are uniformed. Moreover, since it enables supply of ample oxygen and uniformed culture solution L to the roots Q of plant P, it also activates microbes symbiotic with plant P, and the growth of plant P is enhanced with simultaneous enhancement of rearing of aquatics in the bed 12.

Also, since in this living things growing equipment 10 driving of the wave makers 44 and 46 can cause ebb and flow of the culture solution L in the bed 12, each cycle of ebb and flow causes ample dissolving of oxygen in the air into the entire culture solution L in the bed 12, the plant P and the aquatic enable further ample supply of oxygen and, especially when the level of the culture solution L in the bed 12 is lowered, oxygen is sufficiently supplied to the roots Q of plant P, hence growth and proliferation of plant P and the microbes symbiotic with plant are further enhanced.

In the natural ecosystem regeneration system using this living things growing equipment 10 plant P is cultured in the upper part of the bed 12 and aquatics are reared in the culture solution thereunder, hence microbes useful for plants contained in the culture solution L decompose hydraulics' excrements, carcasses and other organic matters into inorganic matters. And these inorganic matters are ingested by plant P as nutrients. In this natural ecosystem regeneration method, the culture solution L in the bed 12 is reasonably cleaned as far as the microbes useful for the given plant and economical without necessity of frequently replacing the culture solution L.

Hence in this natural ecosystem reproducing method using the living things growing equipment 10, waves can be made easily by the wave makers 44 and 46 in the bed 12 with creation of ebb and flow phenomenon, and it is possible to create the optimum natural environments for plants, microbes playing an important role for the growth of plants and even aquatics.

The natural ecosystem reproducing method using this living things growing equipment 10 enables reproduction of natural ecosystem, the secret explaining the birth of lives, on the basis of waving phenomenon which makes waving of the culture solution L in the bed 12 and the ebb-and-flow phenomenon in which difference of the level of the culture solution L in the bed 12 is produced.

Moreover, according to this natural ecosystem reproducing method using the living things growing equipment 10 waving can simply be made by vertical displacement of the wave-making elements 52 and 58 with simultaneous adjustment of stroke of ebb-and-flow of the culture solution L in the bed 12. In this natural ecosystem reproducing method using the living things growing equipment 10, therefore, it is no longer necessary to use a large tank and a pump for circulation of the culture solution and since, moreover, no complicated apparatuses are required for level adjustment of the culture solution, the running cost is substantially lower than in any conventional plant culture method or any rearing method for fishes or the like.

In this case, in a hydroponic apparatus according to the conventional hydroponic culture method as shown in Fig. 13 there was a problem of the temperature of the culture solution rising due to the heat of a 400 W motor but in a ecosystem reproducing method using the living things growing equipment 10 in this embodiment, the motors required for driving of the wave makers 44 and 46 is of 25 W or so, hence the generation of heat caused by operation of pump can be made extremely small. Hence, in this embodiment temperature rise of the culture solution can substantially be prevented.

Moreover, in this natural ecosystem reproducing method using the living things growing equipment 10, waves made by the wave-makers 44 and 46 cause swaying of the roots Q and also the plant P as a whole and since natural breeze is generated in the bed 12, it is not necessary to install e.g. blowers around the bed.

Also, with this living things growing equipment 10, the culture solution L can be fed into the first solution tank-portion 36 and the second solution tank-portion 38 only if the volumes of the first solution tank-portion 36 and the second solution tank-portion 38 are so set that the culture solution L can be stored therein when the wave-making elements 52 and 58 are inserted in the first solution tank-portion 36 and the second solution tank-portion 38, the amount of the culture solution L overflowing thereby is enough to well soak and sway the roots Q of the plant P.

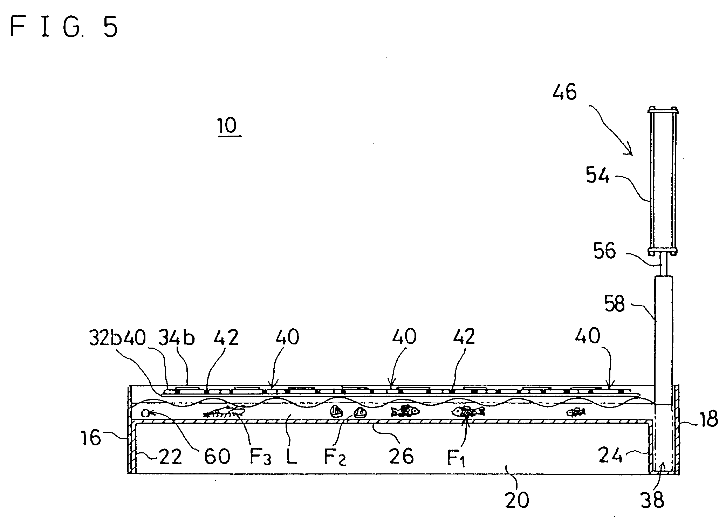

Fig. 5 is an illustrative view showing another example of the living things growing equipment shown in Fig. 1, Fig. 2, Fig. 3 and Fig. 4. In this living things growing equipment 10, unlike the embodiments shown in Figs. 1-4, the wave maker 44, among others, is missing. The first partitioning member 22 is formed stuck to the inside surface of the first side member 16 without any gap from the first side member 16. Hence, in the living things growing equipment 10, the solution tank-portion 36 is not formed. In the living things growing equipment 10 shown in Fig. 5, the solution tank-portion 38 is formed only in one longitudinal end of the bed 12 and above this solution tank-portion 46 is provided the wave maker 46. This wave maker 46, like that shown in the living things growing equipment 10 shown in Figs. 1-4, is so arranged that when the wave maker 46 is driven, the wave-making element 58 attached to the forward end of the rod 56 can vertically reciprocate in the solution tank-portion 38. When the wave-making element 58 is inserted into the solution tank-portion 38, the culture solution L in the bed 12 is waved, this giving rise to waving as well as ebb-and-flow phenomenon.

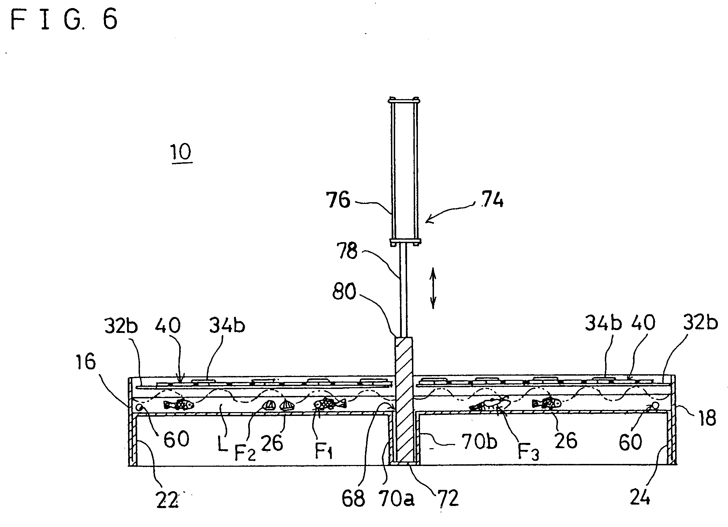

Fig. 6 is an illustrative view showing still another example of the living things growing equipment shown in Fig. 1, Fig. 2, Fig. 3 and Fig. 4. This living things growing equipment 10, unlike the embodiment shown in Figs. 1-4, there is provided, among others, no wave maker at both longitudinal ends of the bed 12. Also, since the first partitioning member 22 is formed in close contact with the inside of the first side member 16 with no gap from the first side member 16, there is not formed first solution tank-portion 36. Further, since the second partitioning member 24 is formed in close contact with the inside of the second side member 18 with no gap therefrom, there is not formed second solution tank-portion 38. With this living things growing equipment 10 another solution tank-portion 68 is formed around the longitudinal center of the bed 12.

In this case, two separate partitioning members 70a and 70b are to be formed roughly in the central portion spaced longitudinal direction of the bed 12. These partitioning members 70a and 70b are roughly formed in the same shape and size as the first partitioning member 22 and the second partitioning member 24 and their lower ends are connected with another bottom member 72. This bottom member 72 is, for example, of a synthetic resin and formed in the same shape and size as the first bottom member 28 and the second bottom member 30.

In the living things growing equipment 10 shown in Fig. 6, therefore, another solution tank-portion 68 is formed roughly at the longitudinal center of the bed 12 and the wave maker 74 is provided above it. Like the living things growing equipment 10 shown in Figs. 1-4, this wave maker 74, when it is driven, the wave-making element 80 attached to the forward end of the rod 78 is caused to reciprocate vertically in the solution tank-portion 68. When the wave maker 80 is inserted into the solution tank-portion 68, waving as well as ebb-and-flow phenomenon is caused in the bed 12.

Since as in the embodiment shown in Figs. 1-4, the optimum environments for growth of the living things such as plants and aquatics are attainable even by the natural ecosystem reproducing method using the living things growing equipment 10 as shown in Fig. 5 and Fig. 6 for the waving and ebb-and-flow phenomena can be caused by the use of the wave maker.

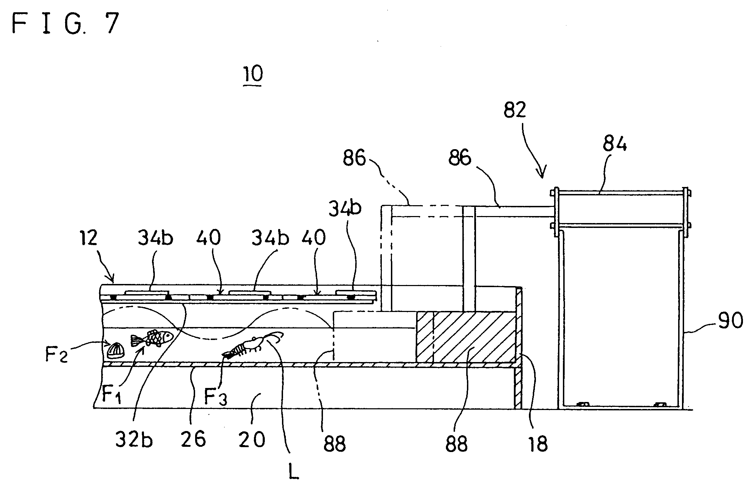

Fig. 7 is an illustrative view of the essential parts showing another example the living things growing equipment shown in Fig. 1, Fig. 2, Fig. 3 and Fig. 4. This living things growing equipment 10 is different from the embodiment shown in Figs. 1-4 especially in its wave-making mechanism. In the living things growing equipment 10 shown in Fig. 7 the wave making element is made to move along the longitudinal direction of the bed 12. Also with it the first solution tank-portion 36 and the second solution tank-portion 38 are missing. Also, in the living things growing equipment 10 shown in Fig. 7, the piston cylinder 84 of the wave maker 82 is mounted on substantially e.g. U-sectioned cylinder frame 90 disposed outside the bed 12. Further, the rod 86 of the piston cylinder 84 is, for example, L-sectioned with its forward end so shaped that the substantially rectangular parallelepiped-shaped wave-making element 88 made of, for example, a synthetic resin can be inserted into the bed 12. As the wave maker 82 is driven, the wave-making element 88 attached to the forward end of the rod 86 reciprocates sideways at one longitudinal end of the third partitioning plate 26. As the wave-making element 88 has moved from the inside of the second side member 18 along the longitudinal direction of the bed 12 toward the first side member 16, the culture solution L in the bed 12 starts waving. Also, both longitudinal end faces of the wave-making element 88 are shaped, for example, to have a plurality of e.g. semi-circular in section concaves 92, 92,...., 92. Formation of these concaves 92 increases the surface area of the wave-making elements 88, this resulting in further effective waving phenomenon in the bed 12.

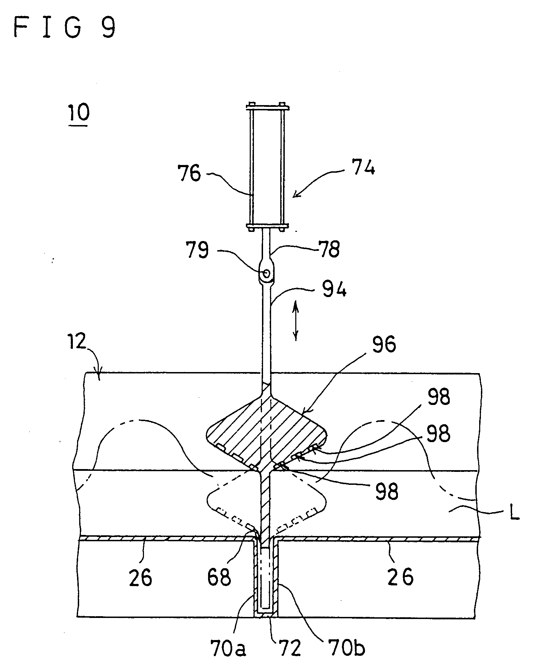

Fig. 9 is an illustrative view of the essential parts showing a variation of the living things growing equipment shown in Fig. 6. This living things growing equipment 10 is different from the living things growing equipment shown in Fig. 6 especially in the shape of the wave-making element. That is, in the wave maker 74 the forward end of its rod 78 is connected thereto another rod 94 and, using a pin 79 and at the axial center of the rod 94 a wave-making element 96 approximately rhombus-sectioned and made of a synthetic resin is formed. And in the lower two sides end portion of this rhombic wave-making elements 96 are made a plurality of, for example, slits 98, 98 rectangle in section.

This living things growing equipment 10, too, like the living things growing equipment shown in Fig. 6, can make waves in the bed 12 and can also cause ebb and flow therein. In this living things growing equipment 10, whose wave-making element 96 is provided with a plurality of slits 98, waves as well as bubbles are generated when the rod 94 is inserted into the culture solution L in the bed 12, and the amount of the dissolved oxygen in the culture solution L is further increased.

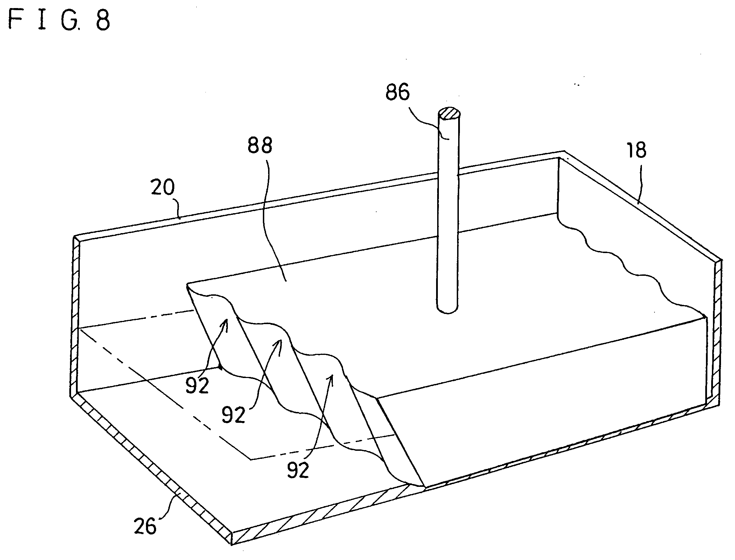

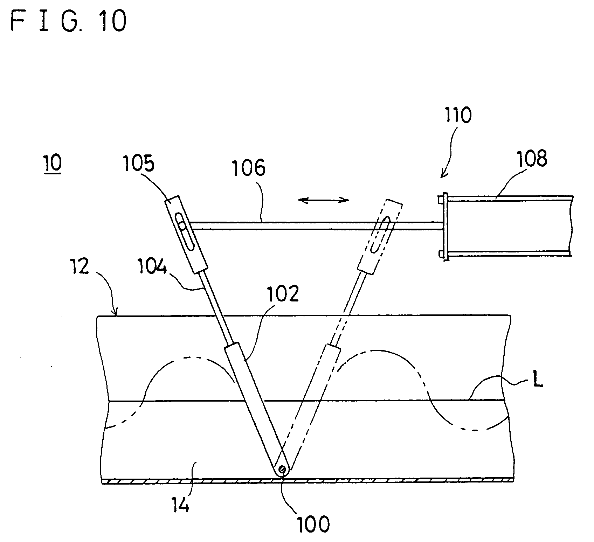

Fig. 10 is an illustrative view showing the essential part of still another embodiment of the living things growing equipment 10 shown in Fig. 1, Fig. 2, Fig. 3 and Fig. 4. This living things growing equipment 10 is different from that shown in Figs. 1-9 especially in its wave-making mechanism. That is, in the living things growing equipment 10 shown in Fig. 10, for example, round-sectioned pivot-portion 100 is formed freely rotatable roughly at longitudinal center of the bed 12 and between the front member 14 and the back member 20. This pivot-portion 100 connects rectangular wave-making plates 102 made of, for example, a synthetic resin as wave-making elements. The wave-making plates 102 have supporting rods 104 along their longitudinal direction from the center of its upper end and the supporting rods 104 are connected with the piston rod 106 of the wave maker 110 via connectors 105.

This wave maker 110 includes a piston cylinder 108, which is secured to a frame (not shown) provided above the longitudinal center of the bed 12 with, for example, brackets. In the living things growing equipment 10 shown in Fig. 10, as the piston cylinder 108 is driven, its rod 106 moves reciprocally along the longitudinal of the bed 12. Further, the supporting rod 104 connected to the forward end of the rod 106 sways inside the bed 12 with the pivot-portion 100 as fulcrum together with the wave-making plate 102. Hence with this living things growing equipment 10 waving can be made by the wave-making plate 102 from the center of the bed 12 toward both longitudinal ends.

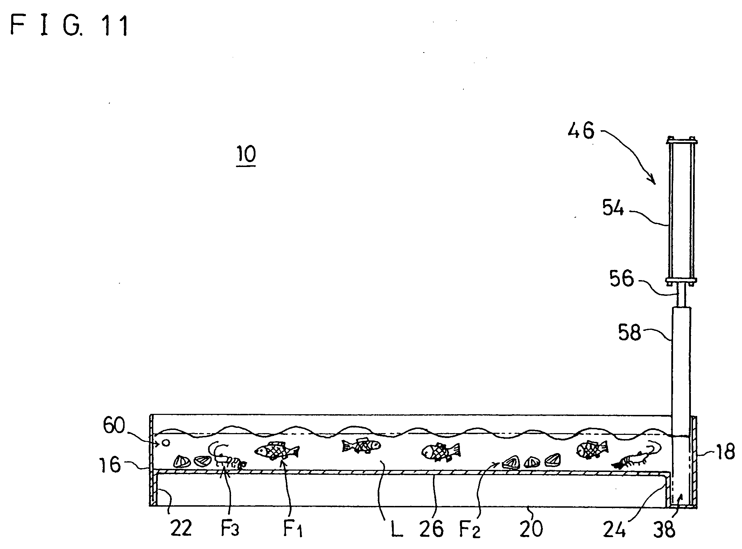

Fig. 11 is an illustrative view showing another embodiment of the present invention. The embodiment of Fig. 11 is different from that shown in Fig. 5 especially in that the planting panels 40 are not mounted on the bed 12. That is, the embodiment shown in Fig. 11 does not include the supporting members 32a, 32b and the projecting members 34a, 34b for holding the planting panel 40 in the bed 12. Hence, in this embodiment aquatics only are reared in the bed 12. In this embodiment of the invention relating to a natural ecosystem reproducing method, too, waving can simply be made in the bed 12 by the wave maker 46 and ebb-and-flow phenomenon can be caused, hence optimum natural environments can be created for rearing of aquatics.

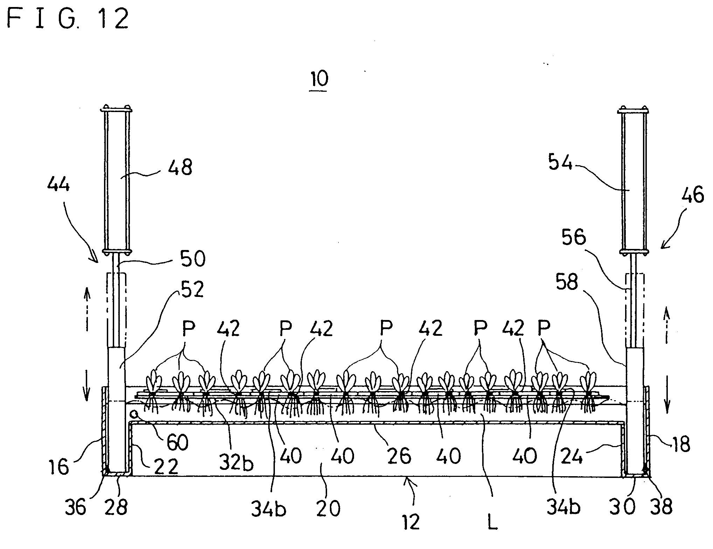

Fig. 12 is an illustrative view showing still another embodiment of the present invention. Unlike the embodiment of Fig. 1-4, this embodiment of the invention cannot be applied to, among others, rearing of aquatics. In other words, the natural ecosystem reproducing method is good for plants only. In this embodiment, too, it is possible to simply do waving in the bed 12 by wave makers 44 and 46 as well as creation of ebb-and-flow phenomenon, hence it is enabled thereby working out of the optimum natural environments for growth of plants and microbes playing an important role for growth thereof.

In the living things growing equipment 10 used in the aforementioned embodiments as the driving means for vertically moving the level of the culture solution L was adopted the method of vertically reciprocating a piston, the so-called cylinder mechanism, but as means of vertically moving the wave-making element may be applied, besides the cylinder mechanism, also pinion rack mechanism, various crank mechanisms, reciprocating linear motion mechanisms using various cams and the principle of the lever. The choice depends on the extent of moving the wave-making element vertically.

In the living things growing equipment 10 used in the above embodiments the height and length of the waves made in the bed 12 by the wave makers proportion to the stroke and period of each piston cylinder. In this case, by increasing the wave height and wave length it becomes possible to extend the range of occurrence of particle motion under the interface of the culture solution L in the bed 12.

For improving the wave-making effect of each wave maker, it is particularly recommended to impart a grade to the third partitioning member 26 of the bed 12and when grading is made, it is possible to narrow the width of its passage from the upstream to the downstream.

Further, in the bed 12, slanted anti-water-repelling plates may be properly arranged around each wave-making element to prevent water-repelling caused by displacement thereof.

Although the present invention has been described and illustrated in detail, it is only for illustration and description of embodiments and it is apparent that they are not to be understood as limitation, and the spirit and scope of the invention are limited only by wording of the appended claim.

## Claims

1. A natural ecosystem reproducing method comprising:
a step of preparing a container for growing a living thing in said container;
a step of storing a culture solution for growing said living thing;
a step of waving said culture solution stored in said container; and
a step of moving the level of said culture solution stored in said container periodically and vertically.

2. A natural ecosystem reproducing method according to claim 1, wherein said container is a box-like bed with the top open and a solution tank-portion is formed in said bed.

3. A natural ecosystem reproducing method according to claim 2, wherein a planting panel planted with seedlings of a plant is held up in said bed and an aquatic animal is reared in said bed under said planting panel.

4. A natural ecosystem reproducing method according to claim 3, wherein said solution tank-portion is formed at the center of said bed.

5. A natural ecosystem reproducing method according to claim 3, wherein said solution tank-portion is formed at one longitudinal end of said bed.

6. A natural ecosystem reproducing method according to claims 4 and 5, wherein a wave maker is mounted to said bed and waving is caused by flowing said culture solution stored in said bed by said wave maker intermittently.

7. A natural ecosystem reproducing method according to claim 6, wherein said wave maker comprise a wave-making element disposed up in said solution tank-portion of said bed and a displacement means for displacing said wave-making element vertically.

8. A natural ecosystem reproducing method according to claim 7, wherein the level of said culture solution is moved periodically and vertically through periodical insertion of said wave-making element into said solution tank-portion by means of said wave-making element vertically.

9. A natural ecosystem reproducing method according to claims 7 and 8, wherein a plurality of slits are formed in said wave-making element.
